# EUROPEAN PATENT SPECIFICATION

(11) **EP 3 247 587 B1**
(45) Date of publication and mention of the grant of the patent: **27.10.2021**
(21) Application number: 16701902.5
(22) Date of filing: 18.01.2016
(51) Int. Cl.: B60P 3/10, B60P 3/12

(54) **VEHICLE**
FAHRZEUG
VÉHICULE

(30) Priority: 22.01.2015 DK 201500036
(43) Date of publication of application: 29.11.2017
(73) Proprietor: Hesseldal Production APS, 5610 Assens (DK)
(72) Inventor: HESSELDAL HANSEN, Lars Erik, 5610 Assens (DK)
(74) Representative: Rottenberg, Annabell Simone
(86) International application number: PCT/DK2016/050015
(87) International publication number: WO 2016/116110

(56) References cited:
- WO-A1-88/04618
- AU-B2- 580 637
- US-A- 2 216 972
- US-A- 2 711 259
- US-A- 4 026 429
- US-A- 5 934 863

## Description

### Field of invention

The present invention generally relates to a vehicle such as, but not limited to, a trailer adapted to be towed by an automobile for transporting boats, waste and the like. The present invention more particularly relates to a vehicle or a trailer comprising a replaceable part that makes it possible to use the vehicle or trailer for various purposes.

### Prior art

Boat trailer owners know that a traditional boat trailer takes up a lot of space during storage, and that this type of trailer is adapted to the specific purpose of transporting boats. Likewise, other types of trailers have been developed for other purposes. Accordingly, several attempts have been made to provide a multipurpose trailer configured to transport boats and other objects. In order to allow a boat to be launched directly into the water, trailers with an extensible section have been developed. By means of this extensible section, it is possible to launch a boat while the trailer is coupled to the towing vehicle. Some of the prior art trailers comprise a base member and an extensible section that can be replaced by another extensible section depending on the transportation task.

From WO 88/04618 A1, US 2,711,259 A, US 5,934,863 A, US 4 026 429 A and AU 580 637 A, trailers having a base part and a displaceable part are known. The displaceable part is extensible from the base part, thereby enabling partly separation from the base part. The extensible part may be used to load subjects, e.g. a boat, after which the extensible part may be reloading onto the base part.

The prior art solutions, however, are either very expensive or difficult to use because the extensible section needs to be displaced vertically in order to insert the extensible section into the base member. The advanced solutions include hydraulic lifting assembly and are costly, while the simpler solutions require access to the lifting device to vertically displace the extensible section.

Accordingly, it is desirable to have an alternative to the traditional vehicle or multipurpose trailer, in order to provide a simpler and more user-friendly solution.

It is an object of the invention to provide a simple and user-friendly vehicle such as a multipurpose trailer having an extensible section that does not need to be displaced vertically in order to insert the extensible section into the base member.

It is also an object of the invention to provide a vehicle such as a multipurpose trailer having an extensible section which can be detached completely from the base member so that the extensible section can be replaced by another extensible section.

### Summary of the invention

The object of the present invention can be achieved by a vehicle as defined in claim 1. Preferred embodiments are defined in the dependent sub claims, explained in the following description and illustrated in the accompanying drawings.

The vehicle according to the invention is a trailer comprising a base member provided with a frame, wherein the trailer comprises two or more wheels, wherein the base member comprises a rotatable member rotatably attached to the frame in such a manner that the rotatable member can rotate relative to the frame, wherein the rotatable member comprises means for displacement of an extensible member along the rotatable member, preferably along the longitudinal axis of the rotatable member, wherein the extensible member is a separate unit, wherein the base member is configured to completely dismount the extensible member from the base member, wherein:
- the base member comprises at least one receiving member configured to receive a roller member or a longitudinal rod member of the extensible member when the roller member or the longitudinal rod member of the extensible member to be inserted into the receiving member is arrange at ground level or

the extensible member comprises at least one receiving member configured to receive a roller member or a longitudinal rod member of the base member when the roller member or the longitudinal rod member of the base member to be inserted into the receiving member is arrange at ground level,
wherein the receiving members comprise a flat bottom surface, and wherein the width of the bottom surface increases towards the distal end of the bottom surface and wherein further that the extensible member comprises at least one wheel assembly or means for mounting at least one wheel assembly.

Hereby, no vertical displacement of the roller member(s) or the longitudinal rod member(s) of the extensible member is required in order to insert the extensible member into the receiving member(s) of the base member or the extensible member.

The vehicle according to the invention is a vehicle comprising a base member provided with a frame.

The frame constitutes the basis of the base member of the vehicle. The frame may have any suitable size and shape. It may be an advantage that the frame comprises two parallel side members connected by at least one cross member.

The vehicle may be an unpowered vehicle towed by a powered vehicle. A trailer is an example of such unpowered vehicle. Such a trailer may comprise two or more wheels. Hereby, it is possible to drive the trailer. This is important when a vehicle is towing the trailer.

The vehicle may be a powered vehicle (motor vehicle) such as a truck (e.g. a flatbed truck).

The base member comprises a rotatable member rotatably attached to the frame in such a manner that the rotatable member can rotate relative to the frame. Accordingly, it is possible to incline the rotatable member in order to lower the distal portion of the rotatable member to bring it into contact with the ground and in that way facilitate insertion of an extensible member into the rotatable member of the base member.

The rotatable member comprises means for displacement of an extensible member along the rotatable member, preferably along the longitudinal axis of the rotatable member. Hereby, it is possible to bring the extensible member into a preferred positon within the base member.

The extensible member is a separate unit. The extensible member may be formed as any suitable type of trailer including: a boat trailer, a vehicle transporter and a bed trailer.

The base member is configured to completely dismount the extensible member from the base member. By applying a separate unit configured to be completely dismounted from the base member, it is possible to replace one extensible member with another depending on the transport task.

Either the base member or the extensible member comprises at least one receiving member configured to receive a roller member or a longitudinal rod member of the corresponding base member or extensible member when the roller member or the longitudinal rod member of the corresponding base member or extensible member to be inserted into the receiving member is arrange at ground level.

The at least one receiving member may have any suitable form allowing it to receive a roller member or a longitudinal rod member of the corresponding base member or extensible member when the roller member or the longitudinal rod member of the corresponding base member or extensible member to be inserted into the receiving member is arrange at ground level.

It may be an advantage that the rotatable member and the receiving member(s) are provided as a one-piece body. Hereby, a strong construction can be achieved. Moreover, it is possible to provide a simple and user-friendly solution.

It is an advantage that the rotatable member is constructed in such a manner that the extensible member can be inserted directly into the base member by means of the receiving member(s) when the front portion of the extensible member engages the ground.

Preferably, the base member comprises two receiving members.

It may be an advantage that the receiving member(s) are provided in the distal end of the rotatable member or in the proximal end of the extensible member. Hereby, insertion of the extensible member is eased.

It may be beneficial that the extensible member comprises means configured to engage with corresponding means provided on the base member in such a manner that vertical displacement of the extensible member relative to the base member can be prevented. Hereby, a safe and reliable construction can be achieved.

It may be beneficial that the receiving members protrude (in extension) from:
- the track members of the rotatable member of the base member or
- the track members of the extensible member. Hereby, the receiving members are easy to access by an extensible member or base member adapted to be received by the corresponding base member or extensible member.

The receiving members comprise a flat bottom surface. Hereby, the insertion of roller members or longitudinal rod members of the extensible member is eased when the roller member or the longitudinal rod member of the extensible member is arranged at ground level.

The width of the bottom surface increases towards the distal end of the bottom surface. Hereby, the insertion of roller members or longitudinal rod members of the extensible member is eased.

It may be an advantage that the receiving members comprise a support wall extending basically perpendicular (preferably essentially vertically) from the side of the bottom surface. Hereby, the support wall keeps the roller members in the right position during insertion of the roller members into the track members or removal of the roller members from the track members.

It may be an advantage that the bottom surface inclines less than 30 degrees, such as less than 20 degrees, preferably less than 10 degrees when the receiving member engages the ground. Hereby, the insertion of roller members or longitudinal rod members of the extensible member is eased.

It may be advantageous that the base member is configured in such a manner that a slidable connection between the extensible member and the base member is achieved, wherein a parallel translation of the proximal end of the extensible member and the centre of gravity of the extensible member is achieved.

It may be an advantage that the vehicle comprises a base member and an extensible member configured to be mounted on the base member.

It may be beneficial that the extensible member comprises two parallel track members each provided with a groove configured to receive roller members rotatably attached to the base member. Hereby, at strong and reliable construction can be achieved. Such a construction moreover prevents vertical displacement of the extensible member relative to the base member once the roller members of the extensible member have been inserted into the groove member.

It may be an advantage that the extensible member is provided with wheels attached in the distal end of the extensible member. Hereby, the mobility of the extensible member is increased.

It is beneficial that the base member comprises two parallel track members each provided with a groove configured to receive roller members rotatably attached to the extensible member. Hereby, a strong, safe and reliable construction can be achieved.

It may be advantageous that the extensible member comprises at least one wheel assembly or means for mounting at least one wheel assembly. Hereby, the mobility of the extensible member is increased.

It may be beneficial that the wheel assembly comprises a wheel arranged laterally which is displaced from the track members or longitudinal rod members of the extensible member.

Hereby, it is possible to insert the extensible member in a manner in which the wheel(s) of the wheel assembly does not engage with the track members or longitudinal rod members of the extensible member.

It may be an advantage that the base member comprises a hand winch or a motor provided in the proximal end of the base member. Hereby, the extensible member can be displaced along the length of the rotatable member in an easy and controlled manner. Accordingly, it is possible for one individual to operate the trailer including mounting the extensible member to the base member and dismounting the extensible member from the base member. Application of a hand winch or a motor provided in the proximal end of the base member, makes it possible to pull the extensible member into engagement with the base member.

It may be advantageous that the base member comprises a tilt device arranged in the proximal end of the base member. Hereby, it is possible to bring the rotatable member into an inclined configuration. It is furthermore possible to keep the fixed in a rotatable member into an inclined configuration.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic perspective view of a trailer according to an unclaimed embodiment;
- Fig. 2: shows a schematic perspective view of a trailer according to the embodiment of fig. 1 while the extensible member is removed from the base member;
- Fig. 3: shows a schematic perspective view of a trailer according to an unclaimed embodiment;
- Fig. 4A: shows a schematic top view of a base member of a trailer according to an unclaimed embodiment;
- Fig. 4B: shows a schematic side view of a base member arranged next to an extensible member of a trailer according to an unclaimed embodiment;
- Fig. 4C: shows a schematic side view of the extensible member being inserted into the base member of a trailer according to an unclaimed embodiment;
- Fig. 4D: shows a schematic side view of the extensible member installed on the base member of a trailer according to an unclaimed embodiment;
- Fig. 4E: shows a close-up view of the extensible member being inserted into the base member as shown in Fig. 4C;
- Fig. 5A: shows a schematic side view of an extensible member being inserted into the base member of a trailer according to an unclaimed embodiment;
- Fig. 5B: shows a close-up view of the extensible member being inserted into the base member as shown in Fig. 5A;
- Fig. 6A: shows a schematic perspective view of a base member of a trailer according to an unclaimed embodiment;
- Fig. 6B: shows a schematic perspective view of a base member that basically corresponds to the one shown in Fig. 6A;
- Fig. 7A: shows a schematic perspective view of a first extensible member of a trailer according to an unclaimed embodiment;
- Fig. 7B: shows a schematic perspective view of a second extensible member of a trailer according to an unclaimed embodiment;
- Fig. 7C: shows a schematic perspective view of a third extensible member of a trailer according to the invention;
- Fig. 8A: shows a perspective view of a track member provided with a longitudinal groove according to the invention;
- Fig. 8B: shows an end view of the track member shown in Fig. 8A;
- Fig. 8C: shows a perspective view of a track member provided with a roller member;
- Fig. 8D: shows an end view of the track member shown in Fig. 8C
- Fig. 8E: shows a schematic perspective view of a truck according to the invention;
- Fig. 8F: shows a close-up view of the longitudinal rod member of the truck shown in Fig. 8E;
- Fig. 9A: shows a schematic view of an extensible member (a boat trailer) being received by a truck according to the invention;
- Fig. 9B: shows a schematic view of the truck shown in Fig. 9A;
- Fig. 9C: shows a schematic view of an extensible member being received by a truck according to the invention;
- Fig. 10A: shows a perspective view of a receiving member according to the invention;
- Fig. 10B: shows a perspective side view of the receiving member show in Fig. 10A;
- Fig. 10C: shows a perspective end view of the receiving member show in Fig. 10A and Fig. 10B and
- Fig. 10D: shows another perspective view of the receiving member show in Fig. 10A, Fig. 10B and Fig. 10C.

### Detailed description of the invention

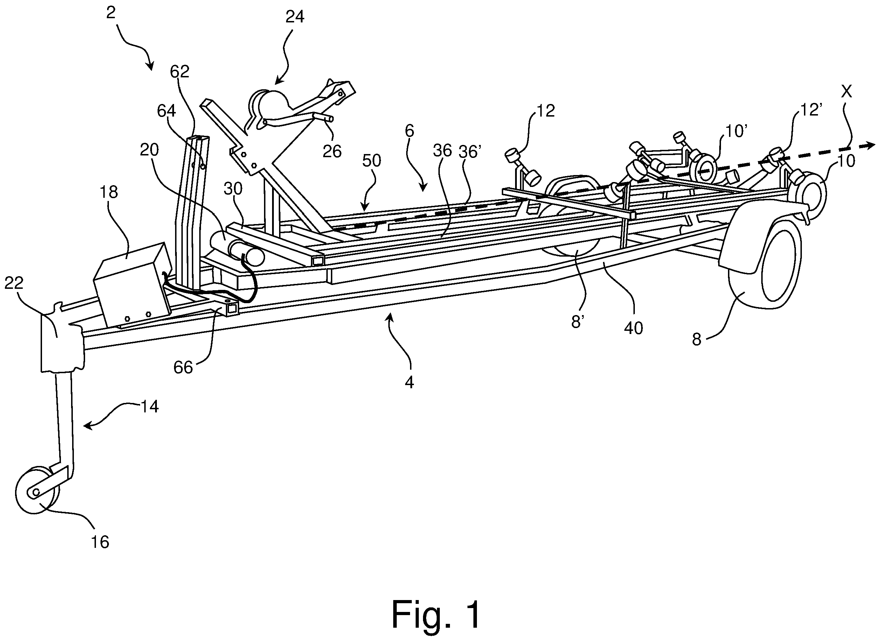

Referring now in detail to the drawings for the purpose of illustrating preferred embodiments of the present invention, a trailer is illustrated in Fig. 1 It is noted that the following examples referring to figures 1-7 are not according to the invention and are present for illustration purposes only.

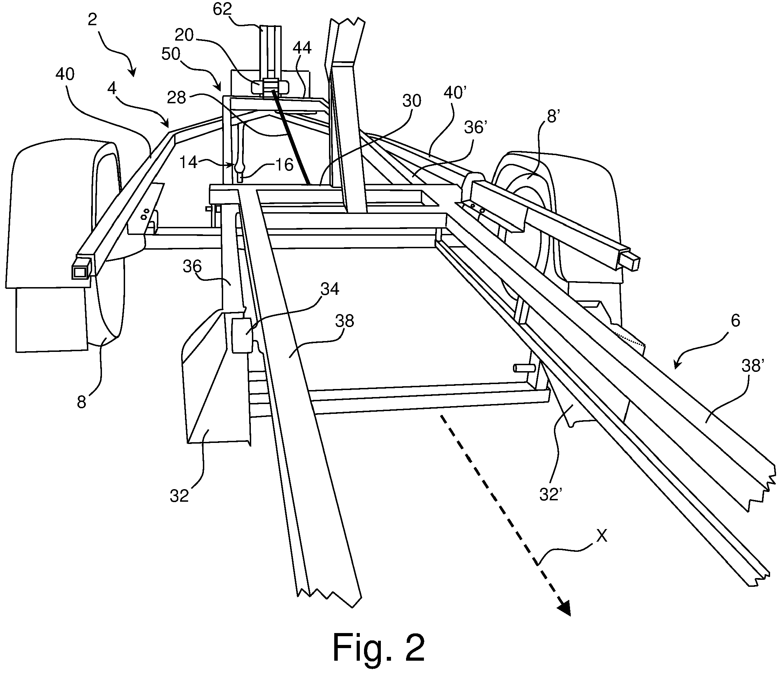

Fig. 1 illustrates a schematic perspective view of a trailer 2 in a first configuration. The trailer 2 comprises a base member 4 provided with two wheels 8, 8', and a nose wheel 14 having a small wheel 16. The nose wheel 14 is removably attached to the base member 4 by means of a schematically illustrated fastening member (it may comprise fastening means, such as screws). The base portion 4 comprises a rotatable member 50 comprising two parallel track members 36, 36' that are configured to receive a plurality of corresponding roller members (see Fig. 2) from the base member 4 arranged on the extensible member (which in this case is a boat trailer) 6. The track members 36, 36' extend parallel to the longitudinal axis X of the trailer 2.

The base member 4 comprises two side members 40 (only one is visible in Fig. 1). A cross member 66 is attached on the distal portion of the side members 40. An upright (basically vertically positioned) support structure 62, provided with a through-going aperture 64 for attachment of the rotatable member 50, is attached to the cross member 66. In Fig. 1, the rotatable member 50 is arranged in its lower position, which is substantially horizontal.

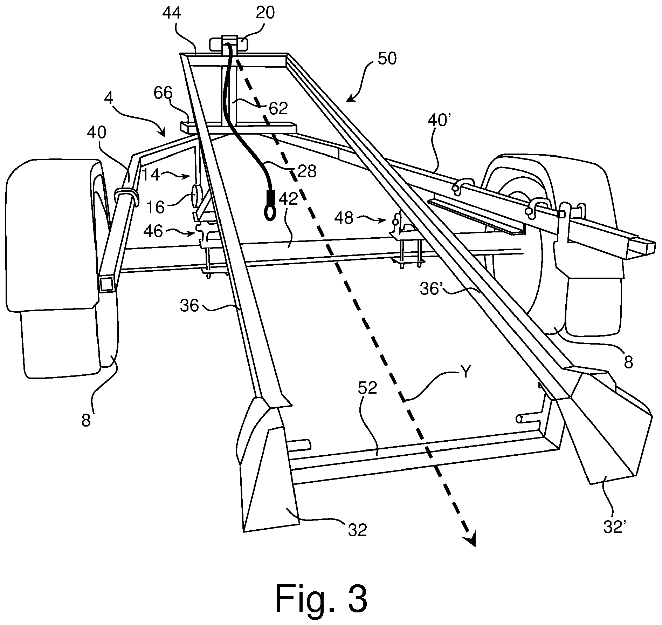

The rotatable member 50 is, however, configured to be rotated in such a manner that the rotatable member 50 is inclined relative to the support structure 62 so that the extensible member 6 can be displaced by translation along the rotatable member 50 (see Fig. 3).

A battery 18 for driving an electric motor 20 is attached to the base member 4. This electric motor 20 is configured to translate the extensible member 6 along the rotatable member 50 (see Fig. 2) in a controlled manner.

The extensible member 6 is formed as a boat trailer that is displaceably mounted to the base member 4 by means of a plurality of roller members (not shown) received by the track members 36, 36'. The extensible member 6 comprises a cross member 30 onto which a hand winch 24 equipped with a handle 26 is attached. Accordingly, the hand winch 24 of the boat trailer 6 can be used to raise or lower a boat from or to the boat trailer 6.

By using the trailer 2, it is possible to bring a boat down into the water, although the vehicle towing the trailer 2 stops in a non-zero distance from the shoreline. Firstly, the boat trailer 6 is displaced towards the shoreline with respect to the base portion 4. Next, the boat is displaced along the boat trailer 2 in the direction towards the water. Therefore, the vehicle towing the trailer 2 may be placed at a large distance, such as 4 meters, from the shoreline and still provide an automatic launching or pick-up of the boat.

Accordingly, the trailer 2 according to the invention enables one individual to launch or pick up a boat by means of the trailer.

The boat trailer 6 is provided with a plurality of roller members 12, 12' to enable easy insertion and removal of a boat. The boat can roll on the roller members 12, 12'. The boat trailer 6 is provided with two ground-engaging wheels 10, 10' enabling the boat trailer 6 to be driven while it is in contact with the ground.

Fig. 2 shows a schematic view of a trailer 2. In Fig. 2, it can be seen that the extensible member 6 is being removed from the base member 4. The trailer 2 comprises a base member 4 having two ground-engaging wheels 8, 8′. The base member 4 comprises two side members 40, 40′. A nose wheel 14 having a wheel 16 is attached to the front portion of one of the side members 40.

A cross member 44 is attached to the front portion of the side members 40, 40′. A vertical support structure 62 for attaching the rotatable member 50 of the base member 4 is attached to the cross member 44. A wire 28 is attached to an electric motor 20 arranged on the base member 4. The wire 28 is intended to pull the extensible member 6 during translation of the extensible member 6 along the rotatable member 50 parallel to the longitudinal axis X of the trailer 2.

The wire 28 is mechanically attached to the cross member 30. Hereby, the wire 28 makes it possible to displace the extensible member 6 during translation of the extensible member 6 along the rotatable member 50 when the extensible member 6 has to be removed from the base member 4 or has to be slided into the base member 4.

As illustrated in Fig. 1, the rotatable member 50 comprises two parallel track members 36, 36′ attached to each other by means of a cross member 44. The track members 36, 36′ are configured to receive a number of roller members 34 rotatably attached to the outside surface of the longitudinal rod members 38, 38′. In the distal end of the track members 36, a receiving member 32, 32′ is provided. The receiving members 32, 32′ are configured to guide the roller members 34 into the track members 36, 36′. Hereby, insertion of the roller members 34 into the track members 36 is eased. The receiving members 32, 32′ comprise a flat bottom surface. The width of the bottom surface increases towards the distal end of the bottom surface so that insertion of roller members 34 is eased. A support wall extends vertically from the side of the bottom surface. The support wall keeps the roller members 34 in the right position during insertion of the roller members 34 into the track members 36 or removal of the roller members 34 from the track members 36.

Fig. 3 illustrates a schematic view of the base member 4 of a trailer 2. The base member 4 comprises two side members 40, 40′ constituting the outer frame of the base member 4. A cross member 42 for attachment of two wheels 8, 8′ and a nose wheel having a wheel 16 is attached to the outer frame of the base member 4. The base member 4 comprises a rotatable member 50 that is rotatably attached to the cross member 42 by means of two mechanical rotation mechanisms 46, 48.

The rotatable member 50 comprises two parallel track members 36, 36′ connected by a first cross member 44 and a second cross member 52. The rotatable member 50 comprises two basically dustpan-shaped receiving members 32, 32′ configured to facilitate insertion of the roller members of an extensible member into the track members 36, 36′.

A cross member 66 is attached to the front portion of the side members 40, 40′. A vertical support structure 62 for attachment of the rotatable member 50 is attached to the cross member 66. In Fig. 3, the rotatable member 50 is arranged in a position in which the rotatable member 50 is inclined away from the support structure 62. Accordingly, an extensible member (e.g. a boat trailer, a car carrier trailer or a covered cargo trailer) can be displaced along the longitudinal axis Y of the rotatable member 50. An electrically driven motor 44 is attached to the cross member 44. A wire 28 configured to be attached to the rotatable member is attached to the motor 44 along the rotatable member.

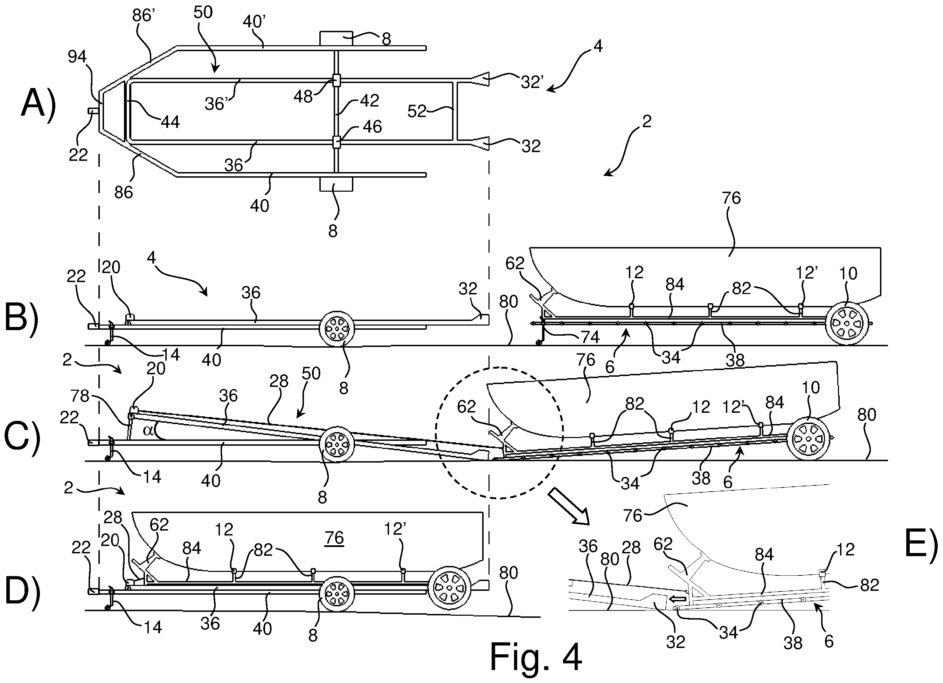

Fig. 4A illustrates a schematic top view of a base member 4 of a trailer. The base member 4 comprises a frame structure comprising two parallel side members 40, 40′ connected by a cross member 42 and a front assembly comprising two rod structures 86, 86′ and a cross rod 94 extending there between. An attachment member 22 for towing the base member 4 is attached to the cross rod 94. Two wheels 8 are attached to a shaft 92 that is rotatably attached to the frame structure.

The base member 4 comprises a rotatable member 50 comprising two parallel track members 36, 36′ connected by a cross member 44 in their proximal end. The parallel track members 36, 36′ are further connected by a cross member 52. The rotatable member 50 is rotatably attached to the cross member 42 by means of a first rotation mechanism 46 and a second rotation mechanism 48 attached to the cross member 42 and to the track members 36, 36′ of the rotatable member 50.

A receiving member 32, 32′ is provided in the distal end of each of the two track members 36, 36′. The receiving members 32, 32′ are configured to facilitate insertion of an extensible member into the base member 4. It can be seen that the receiving members 32, 32′ comprise a flat bottom surface and that the width of the bottom surface increases towards the distal end of the bottom surface so that insertion of an extensible member into the base member 4 is eased.

Fig. 4B illustrates a schematic side view of a base member 4 arranged on the ground 80 next to an extensible member 6 of a trailer 2. The base member 4 basically corresponds to the one shown in Fig. 4A. The base member 4 comprises a side member 40 and a nose wheel 14 attached thereto. An attachment member 22 for towing the base member 4 is provided in the end of the frame of the base member 4. Two ground-engaging wheels 8 are rotatably attached to the frame of the base member 4. A rotatable member is rotatably attached to the frame of the base member 4. A wheel assembly (nose wheel) 74 is attached to the longitudinal rod member 38 for driving the extensible member 6.

It can be seen that the track member 36 of the rotatable member extends horizontally parallel to the side member 40 of the frame of the base member 4. Furthermore, it can be seen that a receiving member 32 is provided in the distal end of the track member 36.

The extensible member 6 comprises a longitudinal rod member 38 provided with a plurality of roller members 34. A ground-engaging wheel 10 is rotatably attached to the longitudinal rod member 38.

A rod member 84 extends parallel to the longitudinal rod member 38 and a plurality of vertically positioned support members 82 are attached to the rod member 84. Roller members 12, 12′ for facilitating insertion of a boat 76 into the boat trailer 6 and removing the boat 76 from the boat trailer 6 are provided at the distal end of the support members 82.

In the front end of the rod member 84, a support structure 62 is provided. The support structure 62 is brought into contact with the front end of the boat 76 received by the boat trailer 6.

A wheel assembly 74 is attached to the front end of the longitudinal rod member 38. The wheel assembly 74 makes it possible to drive the boat trailer 6 e.g. prior to insertion of the boat trailer 6 into the base member 4. The wheel assembly 74 may, however, be removed (see Fig. 4C) when the boat trailer 6 is positioned in the correct position.

Fig. 4C illustrates a schematic side view of the extensible member 6 (boat trailer) being inserted into the base member 4 of a trailer 2. An actuator 78 attached to the side member 40 of the base member 4 and to the track member 36 has been activated. Accordingly, the actuator 78 has been extended and thus the rotatable member 50 has been rotated into an inclined configuration, wherein the angle α between the side member 40 and the track member 36 is about 10-15 degrees.

A wire 28 is attached to a motor 20 arranged at the end of the track member 36. The opposite end of the wire 28 is also attached to the support structure 62 of the extensible member 6 (boat trailer) being inserted into the base member 4.

The extensible member 6 is formed as a boat trailer 6 onto which a boat 76 is arranged. The boat 76 rests on a plurality of roller members 12, 12' and a supporting stop member provided in the top portion of the support structure 62.

The wheel assembly (nose wheel) of the extensible member 6 has been removed. Accordingly, the end of the longitudinal rod member 38 is brought in contact with the ground 80 and insertion of the extensible member 6 into the base member 4 can be conducted by pulling the extensible member 6 towards the base member 4 by activating the motor 20 in order to pull the wire 28 attached to the support structure 62 of the extensible member 6.

Fig. 4E illustrates a close-up view of the extensible member 6 being inserted into the base member 4 as shown in Fig. 4C. It can be seen that the roller members 34 attached to the longitudinal rod member 38 are ground-engaging and ready to be inserted into the receiving member 32 of the base member 4. Therefore, the extensible member 6 can be inserted into the base member 4 simply by pulling the wire 28.

Accordingly, the trailer 2 according to the invention makes it possible to insert the extensible member 6 into the base member 4 without lifting the extensible member 6 for bringing it into engagement with the base member 4. Therefore, the trailer according to the invention can be operated by one individual. The motor 20 shown in Fig. 4B, Fig. 4C and Fig. 4D may be substituted by a hand winch.

Fig. 4D illustrates a schematic side view of the extensible member (boat trailer) 6 installed on the base member 4 of a trailer 2. The base member 4 corresponds to the one shown in Fig. 4B and Fig. 4C, whereas the boat trailer 6 corresponds to the one shown in Fig. 4B and Fig. 4C. It can be seen that the boat trailer 6 and the boat 76 placed on the boat trailer 6 have been received by the base member 4. The actuator 78 (se Fig. 4C) is compressed, and therefore the rotatable member has been rotated into a horizontal configuration, wherein the side member 40 and the track member 36 are parallel. Accordingly, the base member 4 is ready to be towed by a vehicle.

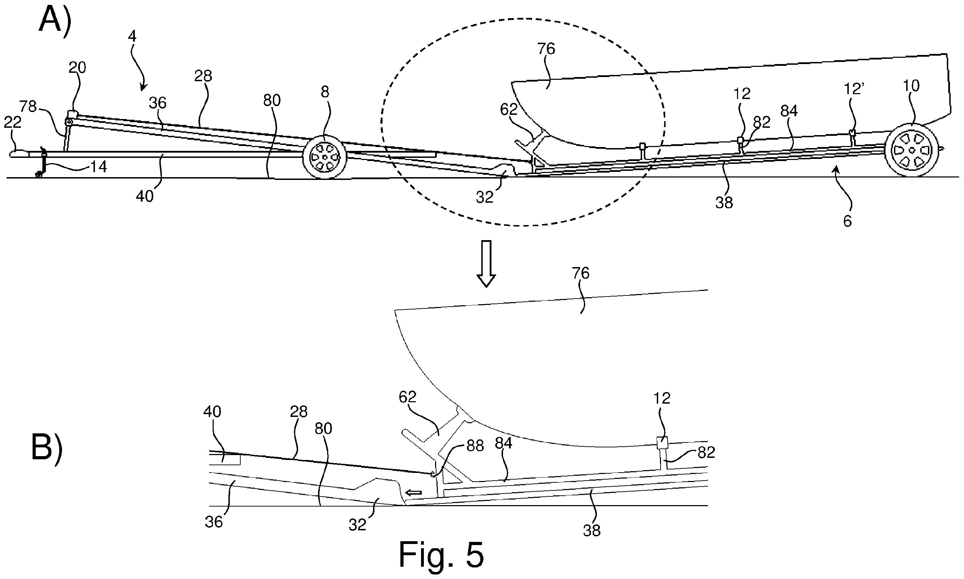

Fig. 5A illustrates a schematic side view of an extensible member (boat trailer) 6 being inserted into the base member 4 of a trailer 2. An actuator 78 attached to the side member 40 of the base member 4 and to the track member 36 has been activated. Therefore, the actuator 78 is extended, and the rotatable member 50 has been rotated into an inclined configuration, wherein the side member 40 is angled relative to the track member 36.

A wire 28 is attached to a motor 20 arranged at the end of the track member 36. The opposite end of the wire 28 is also attached to the support structure 62 of the boat trailer 6 being inserted into the base member 4.

A boat 76 is arranged on the boat trailer 6. The boat 76 rests on a plurality of roller members 12, 12' and a supporting stop member provided in the top portion of the support structure 62. The boat trailer 6 comprises a longitudinal rod member 38 shaped as a track member adapted to receive a number of corresponding roller members attached to the track member 36 of the base member 4. Accordingly, roller members are provided at the base member 4, whereas corresponding track members are provided at the longitudinal rod member 38 of the boat trailer 6.

A rod member 84 extends parallel to the longitudinal rod member 38 of the boat trailer 6. A number of support structures 82 extend perpendicular to the rod member 84. Roller members 12, 12' are attached to the distal end of the support structures 82 for facilitating insertion and removal of the boat 76.

The end of the longitudinal rod member 38 is brought in contact with the ground 80 and insertion of the extensible member 6 into the base member 4 can be conducted by pulling extensible member 6 towards the base member 4 by activating the motor 20 in order to pull the wire 28 attached to the support structure 62 of the extensible member 6.

Fig. 5B illustrates a close-up view of the boat trailer (extensible member) 6 during insertion into the base member 4 as shown in Fig. 5A. The longitudinal rod member 38 formed as a track is brought into contact with the distal end of the receiving member 32. A wire 28 is attached to a hook 88 provided on the support structure 62. The longitudinal rod member 38 formed as a track is adapted to receive a number of corresponding roller members (not shown) attached to the inside surface of the track member 36 of the base member 4.

Accordingly, upon activation of the motor 20 (see Fig. 5A), the wire 28 will be rolled up (by the motor 20). When the motor 20 pulls and hereby rolls up the wire 28, the track shaped longitudinal rod member 38 of the boat trailer 6 will be brought into engagement with the roller members (not shown) attached to the inside surface of the track member 36 of the base member 4.

Accordingly, the boat trailer 6 will be pulled into and securely fixed to the track member 36 of the rotatable member of the base member 4. The use of track members and corresponding roller members secures the boat trailer 6 to the base member 4 and prevents the boat trailer 6 from falling off during transport of the trailer 2.

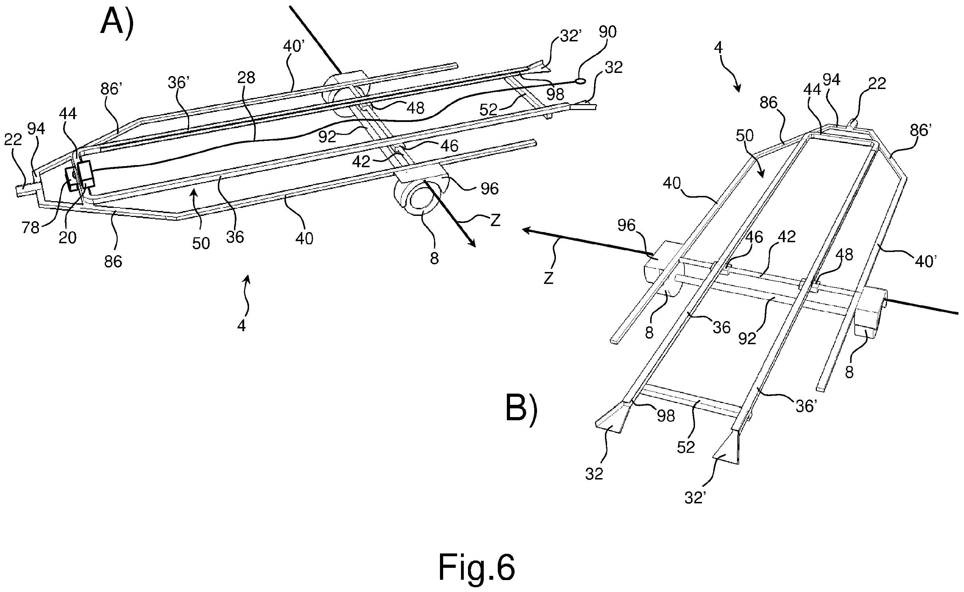

Fig. 6A illustrates a schematic perspective view of a base member 4 of a trailer. The base member 4 comprises a frame structure comprising two parallel side members 40, 40′ connected by a cross member 42 and a front assembly having two rod structures 86, 86′ and a cross rod 94 extending between the two rod structures 86, 86′. An attachment member 22 for towing the base member 4 is attached to the cross rod 94. Two wheels 8 are attached to a shaft 92 that is rotatably attached to the frame structure. A mudguard 96 covers each of the two wheels 8.

The base member 4 is equipped with a rotatable member 50 comprising two parallel track members 36, 36′ connected by a cross member 44 in their proximal end. A cross member 52 connects the track members 36, 36′. The rotatable member 50 is rotatably mounted on the cross member 42 by means of two rotation mechanisms 46, 48 attached to the cross member 42 and to the track members 36, 36′ of the rotatable member 50.

A receiving member 32, 32′ is provided in the distal end of each of the two track members 36, 36′. The receiving members 32, 32′ are arranged to facilitate insertion of the roller members of an extensible member into the groove 96 of the track members 36, 36′ of the base member 4. The receiving members 32, 32′ comprise a flat bottom surface and the width of the bottom surface increases towards the distal end of the bottom surface so that insertion of an extensible member into the base member 4 is eased.

An actuator 78 is arranged to vertically displace the cross member 44 relative to the frame structure of the base member 4. Hereby, the rotatable member 50 is rotated about its rotational axis Z.

An electric motor 20 is provided at the top surface of the cross member 44. A wire 28 is attached to the motor 20. An attachment ring 90 is provided in the distal end of the wire 28.

Fig. 6B shows a schematic perspective view of a base member 4 that basically corresponds to the one shown in Fig. 6A. The actuator, wire and motor are, however, not shown in Fig. 6B. The base member 4 is seen from its distal end. Accordingly, it can be seen that the receiving members 32, 32′ protrude from the track members 36, 36′ of the rotatable member 50 of the base member 4. Therefore, the receiving members 32, 32′ are easy to access by an extensible member adapted to be received by the base member 4.

It can be seen that the track member 36 is provided with a groove 98 extending along the length of the track member 36. The groove 98 is configured to receive the roller members of an extensible member.

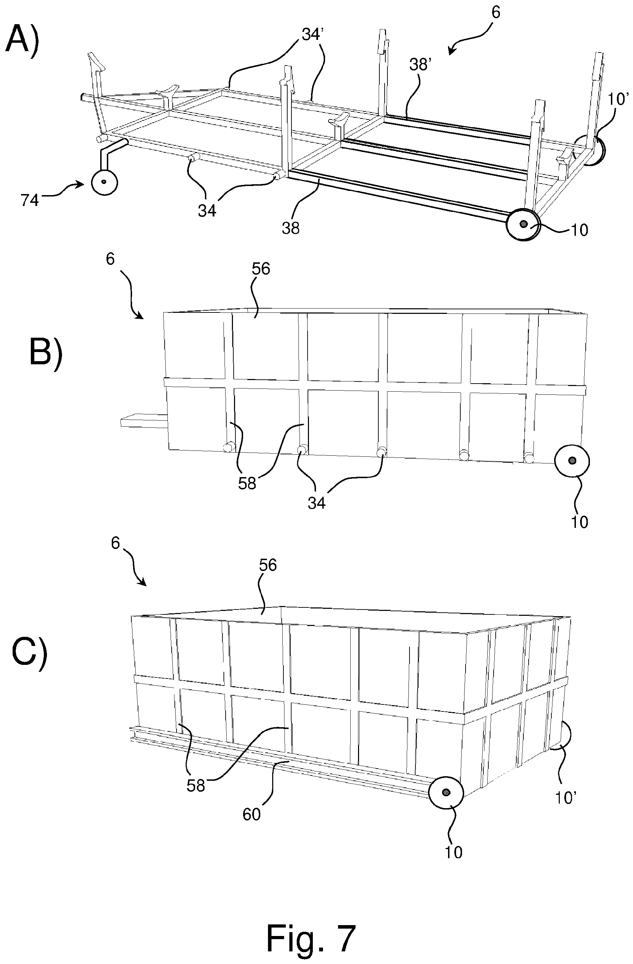

Fig. 7A shows a schematic illustration of a first extensible member 6 (a boat trailer). The boat trailer 6 comprises two parallel longitudinal rod members 38, 38′ that are connected by four cross members.

A number of roller members 34, 34′ are attached to the outside surface of the longitudinal rod members 38, 38′. The roller members 34, 34′ are configured to be received by the track members of the base member (see Fig. 1, Fig. 2 and Fig. 3). More roller members 34, 34′ than the ones shown may be provided.

The boat trailer 6 comprises two wheels 10, 10′ rotatably attached to the two longitudinal rod members 38, 38′. The two ground-engaging wheels 10, 10′ makes it possible to drive the boat trailer 6 on the ground.

A device for attachment of a wheel assembly is provided on the longitudinal rod member 38. A wheel assembly 74 is detachably attached to the longitudinal rod member 38 in order to allow the boat trailer 6 to be driven. The wheel assembly 74 can, however, be removed or lowered in order to insert the roller members 34, 34′ into a track member of a base member.

Fig. 7B illustrates a schematic view of another extensible member 6 (a bed trailer). The bed trailer 6 comprises a box 56 reinforced by a reinforcement structure 58 comprising a number of roller members 34 configured to be inserted into the track members of the base member (se Fig. 1, Fig. 2 and Fig. 3). The bed trailer 6 comprises a shaft having two wheels 10 attached to it.

Fig. 7C illustrates a schematic view of a third extensible member 6 (a bed trailer) according to the invention. The bed trailer 6 comprises a box 56 that is reinforced by a reinforcement structure 58. A track member 60 is attached to the reinforcement structure 58. The track member 60 is configured to receive corresponding roller members rotatably attached to the base member. The bed trailer 6 is provided with two wheels 10, 10′.

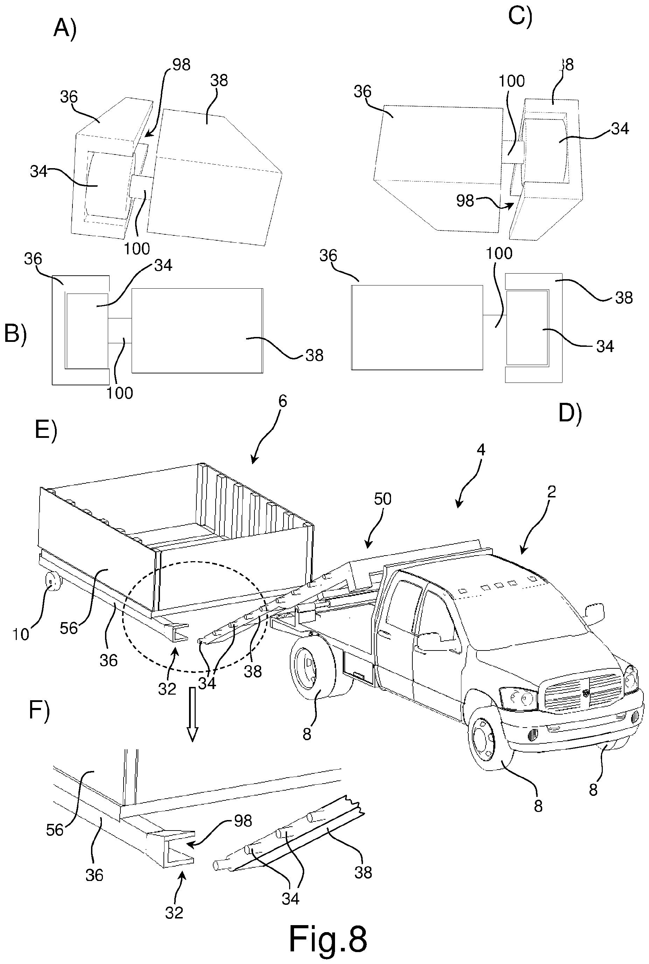

Fig. 8A illustrates a perspective view of a track member 36 provided with a longitudinal groove 98. Fig. 8B illustrates an end view of the track member 36 shown in Fig. 8A. The track member 36 has a rectangular cross-section, and the longitudinal groove 100 has a rectangular cross-section of smaller size. Hereby, it is possible to receive a roller member 34 rotatably attached to the shaft 100 attached to the longitudinal rod member 38. The configuration corresponds to the ones illustrated in Fig. 4B, Fig. 4C, Fig. 4D and Fig. 4E, in which the base member is provided with track member 36 provided with a groove 98, and wherein the extensible member is provided with the longitudinal rod member 38 provided with roller members 34.

Fig. 8C illustrates a perspective view of a track member 36 provided with a roller member 34. Fig. 8D illustrates an end view of the track member 36 shown in Fig. 8C. The longitudinal rod member 38 has a rectangular cross-section and is provided with a longitudinal groove 98 having a rectangular cross-section of a smaller size.

Accordingly, it is possible to receive a roller member 34 rotatably attached to the shaft 100 attached to the track member 36. The configuration corresponds to the ones illustrated in Fig. 7A, Fig. 5A and Fig. 5B, in which the base member is provided with a track member 36 provided with roller members 34, and wherein the extensible member is provided with a longitudinal rod member 38 provided with a groove 98 configured to receive the roller members 34.

By using the configurations illustrated in Fig. 8, it is possible to insert an extensible member into the base member in a manner in which the extensible member is restricted from being displaced vertically and perpendicular to the longitudinal axis of the base member when the extensible member has been inserted into the base member.

Fig. 8E illustrates a schematic perspective view of a truck 2 according to the invention. The truck 2 comprises a base member 4 provided with a frame formed as a truck bed. The truck 2 comprises a plurality of wheels 8, and the base member 4 is provided with a rotatable member 50 rotatably attached to the truck bed in such a manner that the rotatable member 50 can rotate relative to the truck bed. The rotatable member 50 comprises two parallel longitudinal rod members 38 (only one is visibly) provided with laterally protruding roller members 34. The rotatable member 50 is arranged in such a manner that the longitudinal rod members 38 engage the ground.

An extensible member 6 formed as a separate trailer unit 6 is parked just behind the truck 2. The trailer unit 6 is provided with ground-engaging wheels 10, two parallel track members 36 (only one is visible) and a box 56 attached to the parallel track members 36. In the end of each of the track members 36, a receiving member 32 for easing the coupling of the trailer unit 6 and the truck 2 is provided.

Fig. 8F illustrates a close-up view of the longitudinal rod member 36 of the truck 2 shown in Fig. 8E. It can be seen that the receiving member 32 comprises a groove 98. The receiving member 32 is configured to receive the roller members 34 of the longitudinal rod members 38 to be inserted into the receiving member 32 when the receiving member 32 and the distal end of the rod members 38 are arrange at ground level.

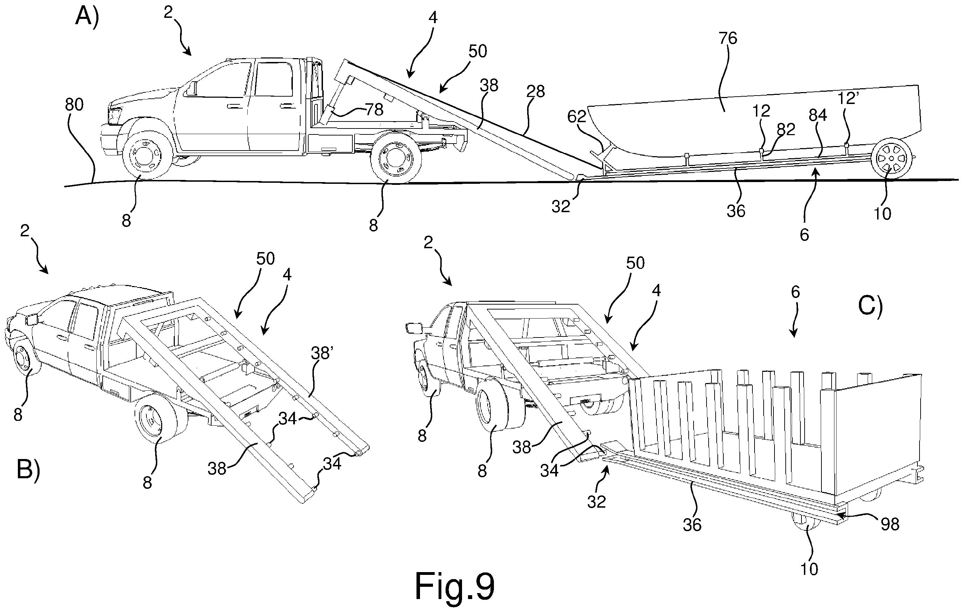

Fig. 9A illustrates a schematic view of an extensible member (a boat trailer) 6 being received by a truck 2 according to the invention. The truck 2 comprises a base member 4 provided with a frame formed as a truck bed. The truck 2 is equipped with wheels 8. The base member 4 is provided with a rotatable member 50 rotatably attached to the truck bed in such a way that the rotatable member 50 can rotate relative to the truck bed. The rotatable member 50 has two parallel longitudinal rod members 38 (only the left is visibly) provided with medially protruding roller members (not shown). The rotatable member 50 is arranged in such a manner that the longitudinal rod members 38 engage the ground 80.

An actuator (e.g. an electric actuator) 78 is attached to the truck bed and to the bottom side of the rotatable member 50 of the base member 4. The actuator 78 is configured to vertically displace the proximal end of the rotatable member 50 of the base member 4 and hereby rotate the rotatable member 50 of the base member 4 relative to the truck bed.

An extensible member 6 formed as a separate boat trailer 6 is arranged just behind the truck 2. The trailer unit 6 is provided with ground-engaging wheels 10, track members 36 (only one is visible). A rod member 84 extends parallel to the track member 36, and a plurality of vertically positioned support members 82 are attached to the rod member 84. Roller members 12, 12' for facilitating insertion of a boat 76 into the boat trailer 6 and removing the boat 76 from the boat trailer 6 are provided at the distal end of the support members 82. In the front end of the rod member 84, a support structure 62 is provided. The support structure 62 is brought into contact with the front end of the boat 76 received by the boat trailer 6. In the end of each of the track members 36, a receiving member 32 for easing the coupling of the trailer unit 6 and the truck 2 is provided. Further, a wire 28 is attached to a hook provided on the boat trailer 6. The wire 28 may be attached to an electric motor or a hand winch (not shown) provided at the proximal end of the base member 4 or at the truck bed.

A wheel assembly may be attached to the front end of the track member 36. The wheel assembly can make it possible to drive the boat trailer 6 e.g. prior to insertion of the boat trailer 6 into the base member 4.

Fig. 9B illustrates a schematic perspective end view of the truck 2 shown in Fig. 9A. The truck 2 comprises a base member 4 provided with a rotatable member 50 provided with two parallel longitudinal rod members 38, 38′. The longitudinal rod members 38, 38′ are provided with medially extending roller members 34 configured to be received by a groove in the track members corresponding to the ones shown in Fig. 9A.

Fig. 9C illustrates a schematic view of an extensible member formed as a trailer 6 being received by a truck 2 with wheels 8. The truck 2 corresponds to the one shown in Fig. 9A and Fig. 9B. The truck 2 is provided with a base member 4 equipped with a rotatable member 50 having two parallel longitudinal rod members 38 (only one is visibly). The longitudinal rod members 38 are equipped with medially extending roller members 34 adapted to be received by a groove of track members 36 of the trailer 6.

The trailer 6 is parked behind the truck 2 in such a manner that the receiving members 32 engage the ground and is arranged close to the distal end of the longitudinal rod members 38. Accordingly, the receiving members 32 can receive the roller members 34 rotatably attached to the longitudinal rod members 38. The roller members 34 are configured to be received by the groove 98 provided in the track members 36.

It is important to underline that the track members 36 may be rotated 180 degrees so that the grooves 98 are configured to receive roller members 34 protruding laterally from the longitudinal rod members 38.

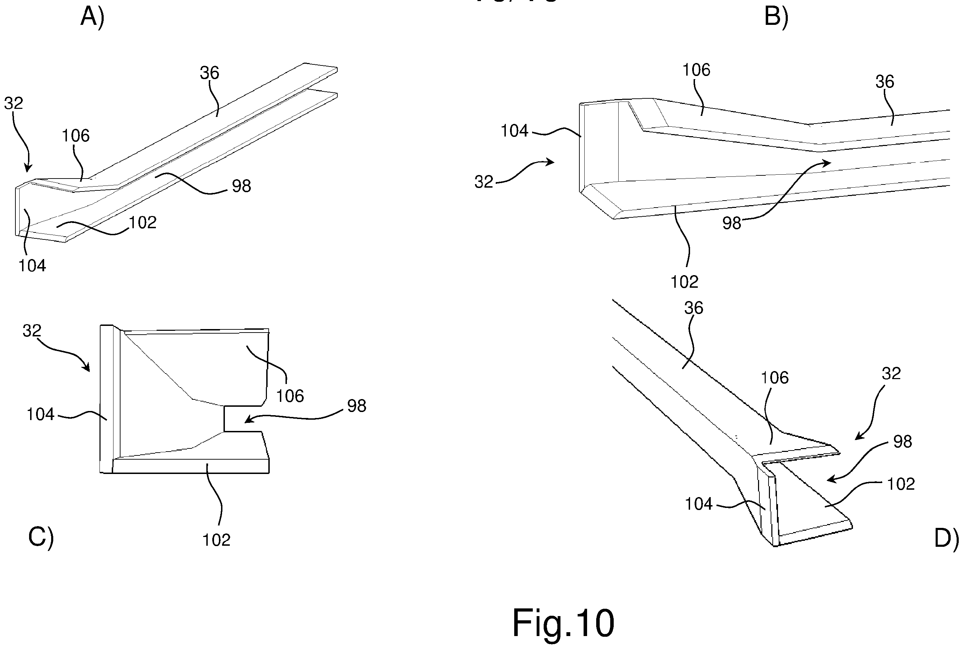

Fig. 10A illustrates a perspective view of a receiving member 32 according to the invention. Fig. 10B illustrates a perspective side view of the receiving member show in Fig. 10A. Fig. 10C illustrates a perspective end view of the receiving member 32 shown in Fig. 10A and Fig. 10B, and Fig. 10D illustrates another perspective view of the receiving member 32 show in Fig. 10A, Fig. 10B and Fig. 10C.

The receiving member 32 is provided in extension of a track member 36 provided with a groove 98. The receiving member 32 comprises a bottom surface 102. The receiving member 32 comprises a support wall 104 extending basically perpendicular from the side portion of the bottom surface 102. Accordingly, the support wall 104 keeps the roller members in the right position during insertion of the roller members into the track members.

The receiving member 32 comprises an upper wall 106 that is inclined relative to the bottom surface 102. Hereby, the upper wall 106 is configured to guide roller members into the right vertical position during insertion of the roller members into the track members.

The width of the bottom surface 102 increases towards the distal end of the bottom surface 102. This can be seen in Fig. 10A, Fig. 10C and Fig. 10D. Hereby, the insertion of the roller members or the longitudinal rod members of the extensible member is eased.

It is important to underline that the extensible member 6 according to the invention may be formed in many ways not illustrated in the figures. It is possible to form the extensible member 6 as a vehicle transporter or a box trailer by way of example.

### List of reference numerals

- 2: Trailer
- 4: Base member
- 6: Extensible member
- 8, 8': Wheel
- 10, 10': Wheel
- 12, 12': Roller member
- 14: Nose wheel
- 16: Wheel
- 18: Battery
- 20: Motor
- 22: Attachment member
- 24: Hand winch
- 26: Handle
- 28: Wire
- 30: Cross member
- 32, 32′: Receiving member
- 34, 34′: Roller member
- 36, 36′: Track member
- 38, 38′: Longitudinal rod member
- 40, 40′: Side member
- 42, 44: Cross member
- 46, 48: Rotation mechanism
- 50: Rotatable member
- 52, 52′, 52", 52": Cross member
- 56: Box
- 58: Reinforcement structure
- 60: Track member
- 62: Support structure
- 64: Aperture
- 66: Cross member
- 70: Front member
- 72: Direction
- 74: Wheel assembly
- 76: Boat
- 78: Actuator
- 80: Ground
- 82: Support member
- 84: Rod member
- 86, 86′: Rod structure
- 88: Hook
- 90: Attachment ring
- 92: Shaft
- 94: Cross rod
- 96: Trailer mudguard
- 98: Groove
- 100: Shaft
- 102: Bottom surface
- 104: Support wall
- 106: Upper wall
- X, Y: Longitudinal axis
- Z: Rotational axis
- α: Angle

## Claims

1. A vehicle (2) comprising a base member (4) provided with a frame (40, 40′, 42, 86, 86′, 94), wherein the vehicle (2) comprises a plurality of wheels (8, 8′), wherein the base member (4) comprises a rotatable member (50) rotatably attached to the frame (40, 40′, 42, 86, 86′, 94) in such a manner that the rotatable member (50) can rotate relative to the frame (40, 40′, 42, 86, 86′, 94), the vehicle further comprising an extensible member (6), wherein the rotatable member (50) comprises means (34, 34′, 36, 36′) for displacement of the extensible member (6) along the rotatable member (50), preferably along the longitudinal axis (Y) of the rotatable member (50), wherein the extensible member (6) is a separate unit (6), wherein the base member (4) is configured to completely dismount the extensible member (6) from the base member (4), wherein:
- the base member (4) comprises at least one receiving member (32, 32′) configured to receive a roller member (34, 34′) or a longitudinal rod member (38, 38′) of the extensible member (6) when the roller member (34, 34′) or the longitudinal rod member (38, 38′) of the extensible member (6) to be inserted into the receiving member (32, 32′) is arrange at ground level or
- the extensible member (6) comprises at least one receiving member (32, 32′) configured to receive a roller member (34, 34′) or a longitudinal rod member (38, 38′) of the base member (4) when the roller member (34, 34′) or the longitudinal rod member (38, 38′) of the base member (4) to be inserted into the receiving member (32, 32′) is arrange at ground level, wherein the receiving members (32, 32′) comprise a flat bottom surface (102), and wherein the width of the bottom surface (102) increases towards the distal end of the bottom surface (102), **characterised in that** the extensible member (6) comprises two parallel track members (36, 36′) each provided with a groove (98) configured to receive roller members (34, 34′) rotatably attached to the base member (4).

2. A vehicle (2) according to claim 1, **characterised in that** the receiving member(s) (32, 32′) are provided in the distal end of the rotatable member (50) or in the proximal end of the extensible member (6).

3. A vehicle (2) according to claim 1 or claim 2, **characterised in that** the extensible member (6) comprises means (34, 34′, 60, 60′) configured to engage with corresponding means (36, 36′, 34, 34′) provided on the base member (4) in such a manner that vertical displacement of the extensible member (6) relative to the base member (4) can be prevented.

4. A vehicle (2) according to one of the preceding claims, **characterised in that** the receiving members (32, 32′) protrude (in extension) from:
- the track members (36, 36′) of the rotatable member (50) of the base member (4) or
- the track members (36, 36′) of the extensible member (6).

5. A vehicle (2) according to one of the preceding claims, **characterised in that** the receiving members (32, 32′) comprise a support wall (104) extending basically perpendicular (preferably essentially vertically) from the side of the bottom surface (102).

6. A vehicle (2) according to one of the preceding claims, **characterised in that** the base member (4) is configured in such a manner that a slidable connection between the extensible member (6) and the base member (4) is achieved, wherein a parallel translation of the proximal end of the extensible member (6) and the centre of gravity of the extensible member (6) is achieved.

7. A vehicle (2) according to one of the preceding claims, **characterised in that** the vehicle (2) comprises a base member (4) and an extensible member (6) configured to be mounted on the base member (4).

8. A vehicle (2) according to one of the preceding claims 1-8, **characterised in that** the base member (4) comprises two parallel track members (36, 36′) each provided with a groove (98) configured to receive roller members (34, 34′) rotatably attached to the extensible member (6).

9. A vehicle (2) according to one of the preceding claims, **characterised in that** the extensible member (6) comprises at least one wheel assembly (74, 14) or means for mounting at least one wheel assembly (74, 14).

10. A vehicle (2) according to claim 9, **characterised in that** the wheel assembly (74, 14) comprises a wheel arranged laterally displaced from the track members (36, 36′) or longitudinal rod members (38, 38′) of the extensible member (6).

11. A vehicle (2) according to one of the preceding claims, **characterised in that** the base member (4) comprises a hand winch or a motor (20) provided in the proximal end of the base member (4).

12. A vehicle (2) according to one of the preceding claims, **characterised in that** the base member (4) comprises a tilt device (62, 64, 66, 70, 78) arranged in the proximal end of the base member (4).

## Patentansprüche

1. Fahrzeug (2), umfassend ein Basiselement (4), das mit einem Rahmen (40, 40′, 42, 86, 86′, 94) bereitgestellt ist, wobei das Fahrzeug (2) eine Vielzahl von Rädern (8, 8′) umfasst, wobei das Basiselement (4) ein drehbares Element (50) umfasst, das drehbar an dem Rahmen (40, 40′, 42, 86, 86′, 94) derart angebracht ist, dass sich das drehbare Element (50) relativ zu dem Rahmen (40, 40′, 42, 86, 86′, 94) drehen kann, wobei das Fahrzeug ferner ein erweiterbares Element (6) umfasst, wobei das drehbare Element (50) Mittel (34, 34′, 36, 36′) zum Verschieben des erweiterbaren Elementes (6) entlang des drehbaren Elements (50) umfasst, vorzugsweise entlang der Längsachse (Y) des drehbaren Elements (50), wobei das erweiterbare Element (6) eine separate Einheit (6) ist, wobei das Basiselement (4) konfiguriert ist, um das erweiterbare Element (6) vollständig (6) von dem Basiselement (4) zu entfernen, wobei:
- das Basiselement (4) mindestens ein Aufnahmeelement (32, 32′) umfasst, das konfiguriert ist, um ein Rollenelement (34, 34′) oder ein Längsstabelement (38, 38′) des erweiterbaren Elements (6) aufzunehmen, wenn das Rollenelement (34, 34′) oder das Längsstabelement (38, 38′) des erweiterbaren Elements (6), das in das Aufnahmeelement (32, 32′) eingeführt werden soll, auf Bodenhöhe angeordnet ist, oder
- das erweiterbare Element (6) mindestens ein Aufnahmeelement (32, 32′) umfasst, das konfiguriert ist, um ein Rollenelement (34, 34′) oder ein Längsstabelement (38, 38′) des Basiselements (4) aufzunehmen, wenn das Rollenelement (34, 34′) oder das Längsstabelement (38, 38′) des Basiselements (4), das in das Aufnahmeelement (32, 32′) eingeführt werden soll, auf Bodenhöhe angeordnet ist,
wobei die Aufnahmeelemente (32, 32′) eine ebene Bodenfläche (102) aufweisen und wobei die Breite der Bodenfläche (102) zum distalen Ende der Bodenfläche (102) hin zunimmt, **dadurch gekennzeichnet, dass** das erweiterbare Element (6) zwei parallele Schienenelemente (36, 36′) umfasst, die jeweils mit einer Nut (98) bereitgestellt sind, die konfiguriert ist, um Rollenelemente (34, 34′) aufzunehmen, die drehbar an dem Basiselement (4) befestigt sind.

2. Fahrzeug (2) nach Anspruch 1, **dadurch gekennzeichnet, dass** das (die) Aufnahmeelement (e) (32, 32′) im distalen Ende des drehbaren Elements (50) oder im proximalen Ende des erweiterbaren Elements (6) bereitgestellt ist (sind).

3. Fahrzeug (2) nach Anspruch 1 oder Anspruch 2, **dadurch gekennzeichnet, dass** das erweiterbare Element (6) Mittel (34, 34′, 60, 60′) umfasst, die konfiguriert sind, um in entsprechende Mittel (36, 36′, 34, 34′) einzugreifen, die derart an dem Basiselement (4) bereitgestellt sind, dass eine vertikale Verschiebung des erweiterbaren Elements (6) relativ zum Basiselement (4) verhindert werden kann.

4. Fahrzeug (2) nach einem der vorstehenden Ansprüche, **dadurch gekennzeichnet, dass** die Aufnahmeelemente (32, 32′) (in Erweiterung) von den folgenden Elementen vorstehen:
- den Schienenelementen (36, 36′) des drehbaren Elements (50) des Basiselements (4) oder
- den Schienenelementen (36, 36′) des erweiterbaren Elements (6) .

5. Fahrzeug (2) nach einem der vorstehenden Ansprüche, **dadurch gekennzeichnet, dass** die Aufnahmeelemente (32, 32′) eine Stützwand (104) umfassen, die sich im Wesentlichen senkrecht (vorzugsweise im Wesentlichen vertikal) von der Seite der Bodenfläche (102) aus erstreckt.

6. Fahrzeug (2) nach einem der vorstehenden Ansprüche, **dadurch gekennzeichnet, dass** das Basiselement (4) derart konfiguriert ist, dass eine verschiebbare Verbindung zwischen dem erweiterbaren Element (6) und dem Basiselement (4) erreicht wird, wobei eine Parallelverschiebung des proximalen Endes des erweiterbaren Elements (6) und des Schwerpunkts des erweiterbaren Elements (6) erreicht wird.

7. Fahrzeug (2) nach einem der vorstehenden Ansprüche, **dadurch gekennzeichnet, dass** das Fahrzeug (2) ein Basiselement (4) und ein erweiterbares Element (6) umfasst, das konfiguriert ist, um an dem Basiselement (4) angebracht zu sein.

8. Fahrzeug (2) nach einem der vorstehenden Ansprüche 1 bis 8, **dadurch gekennzeichnet, dass** das Basiselement (4) zwei parallele Schienenelemente (36, 36') umfasst, die jeweils mit einer Nut (98) bereitgestellt sind, die konfiguriert ist, um Rollenelemente (34, 34′) aufzunehmen, die drehbar an dem erweiterbaren Element (6) angebracht sind.

9. Fahrzeug (2) nach einem der vorstehenden Ansprüche, **dadurch gekennzeichnet, dass** das erweiterbare Element (6) mindestens eine Radanordnung (74, 14) oder Mittel zur Montage mindestens einer Radanordnung (74, 14) umfasst.

10. Fahrzeug (2) nach Anspruch 9, **dadurch gekennzeichnet, dass** die Radanordnung (74, 14) ein Rad umfasst, das seitlich versetzt zu den Schienenelementen (36, 36') oder Längsstabelementen (38, 38′) des erweiterbaren Elements (6) angeordnet ist.

11. Fahrzeug (2) nach einem der vorstehenden Ansprüche, **dadurch gekennzeichnet, dass** das Basiselement (4) eine Handwinde oder einen Motor (20) umfasst, der im proximalen Ende des Basiselements (4) bereitgestellt ist.

12. Fahrzeug (2) nach einem der vorstehenden Ansprüche, **dadurch gekennzeichnet, dass** das Basiselement (4) eine Kippvorrichtung (62, 64, 66, 70, 78) umfasst, die im proximalen Ende des Basiselements (4) angeordnet ist.

## Revendications

1. Véhicule (2), comprenant un élément de base (4) pourvu d'un cadre (40, 40′, 42, 86, 86′, 94), dans lequel le véhicule (2) comprend une pluralité de roues (8, 8′), dans lequel l'élément de base (4) comprend un élément rotatif (50) attaché de façon rotative au cadre (40, 40′, 42, 86, 86′, 94) de manière telle que l'élément rotatif (50) puisse entrer en rotation relativement au cadre (40, 40′, 42, 86, 86′, 94), le véhicule comprenant en outre un élément extensible (6), dans lequel l'élément rotatif (50) comprend des moyens (34, 34′, 36, 36′) pour le déplacement de l'élément extensible (6) le long de l'élément rotatif (50), de préférence le long de l'axe longitudinal (Y) de l'élément rotatif (50), dans lequel l'élément extensible (6) est une unité séparée (6), dans lequel l'élément de base (4) est configuré pour complètement démonter l'élément extensible (6) à partir de l'élément de base (4), dans lequel :
- l'élément de base (4) comprend au moins un élément de réception (32, 32′) configuré pour recevoir un élément galet (34, 34′) ou un élément tige longitudinal (38, 38′) de l'élément extensible (6) lorsque l'élément galet (34, 34′) ou l'élément tige longitudinal (38, 38′) de l'élément extensible (6) destiné à être inséré dans l'élément de réception (32, 32′) est agencé au niveau du sol, ou
- l'élément extensible (6) comprend au moins un élément de réception (32, 32′) configuré pour recevoir un élément galet (34, 34′) ou un élément tige longitudinal (38, 38′) de l'élément de base (4) lorsque l'élément galet (34, 34′) ou l'élément tige longitudinal (38, 38′) de l'élément de base (4) destiné à être inséré dans l'élément de réception (32, 32′) est agencé au niveau du sol, dans lequel les éléments de réception (32, 32′) comprennent une surface inférieure plate (102), et dans lequel la largeur de la surface inférieure (102) augmente vers l'extrémité distale de la surface inférieure (102), **caractérisé en ce que** l'élément extensible (6) comprend deux éléments rails parallèles (36, 36′), chacun pourvu d'une rainure (98) configurée pour recevoir des éléments galets (34, 34′) attachés de façon rotative à l'élément de base (4).

2. Véhicule (2) selon la revendication 1, **caractérisé en ce que** l'élément ou les éléments de réception (32, 32′) sont prévus dans l'extrémité distale de l'élément rotatif (50) ou dans l'extrémité proximale de l'élément extensible (6).

3. Véhicule (2) selon la revendication 1 ou la revendication 2, **caractérisé en ce que** l'élément extensible (6) comprend des moyens (34, 34′, 60, 60′) configurés pour entrer en prise avec des moyens correspondants (36, 36′, 34, 34′) prévus sur l'élément de base (4) de manière telle qu'un déplacement vertical de l'élément extensible (6) relativement à l'élément de base (4) puisse être empêché.

4. Véhicule (2) selon l'une des revendications précédentes, **caractérisé en ce que** les éléments de réception (32, 32′) font saillie (en extension) à partir de :
- les éléments rails (36, 36′) de l'élément rotatif (50) de l'élément de base (4), ou
- les éléments rails (36, 36′) de l'élément extensible (6).

5. Véhicule (2) selon l'une des revendications précédentes, **caractérisé en ce que** les éléments de réception (32, 32′) comprennent une paroi de support (104) s'étendant de façon fondamentalement perpendiculaire (de préférence de façon essentiellement verticale) à partir du côté de la surface inférieure (102).

6. Véhicule (2) selon l'une des revendications précédentes, **caractérisé en ce que** l'élément de base (4) est configuré de manière telle qu'un raccord coulissant entre l'élément extensible (6) et l'élément de base (4) soit accompli, dans lequel une translation parallèle de l'extrémité proximale de l'élément extensible (6) et du centre de gravité de l'élément extensible (6) est accomplie.

7. Véhicule (2) selon l'une des revendications précédentes, **caractérisé en ce que** le véhicule (2) comprend un élément de base (4) et un élément extensible (6) configuré pour être monté sur l'élément de base (4).

8. Véhicule (2) selon l'une des revendications précédentes 1 à 8, **caractérisé en ce que** l'élément de base (4) comprend deux éléments rails parallèles (36, 36′), chacun pourvu d'une rainure (98) configurée pour recevoir des éléments galets (34, 34′) attachés de façon rotative à l'élément extensible (6).

9. Véhicule (2) selon l'une des revendications précédentes, **caractérisé en ce que** l'élément extensible (6) comprend au moins un ensemble roue (74, 14) ou des moyens pour monter au moins un ensemble roue (74, 14).

10. Véhicule (2) selon la revendication 9, **caractérisé en ce que** l'ensemble roue (74, 14) comprend une roue agencée de façon latéralement déplacée par rapport aux éléments rails (36, 36′) ou éléments tiges longitudinaux (38, 38′) de l'élément extensible (6).

11. Véhicule (2) selon l'une des revendications précédentes, **caractérisé en ce que** l'élément de base (4) comprend un treuil manuel ou un moteur électrique (20) prévu dans l'extrémité proximale de l'élément de base (4).

12. Véhicule (2) selon l'une des revendications précédentes, **caractérisé en ce que** l'élément de base (4) comprend un dispositif d'inclinaison (62, 64, 66, 70, 78) agencé dans l'extrémité proximale de l'élément de base (4).
